# EUROPÄISCHE PATENTANMELDUNG

(11) **EP 0 907 064 A2**
(43) Veröffentlichungstag der Anmeldung: **07.04.1999**
(21) Anmeldenummer: 98118643.0
(22) Anmeldetag: 02.10.1998
(51) Int. Cl.: F28F 13/18, F28F 19/06, F28F 1/12

(54) **Wärmetauscher, insbesondere Luftkühler für Kraftwerke, und Verfahren zu seiner Herstellung**

(30) Priorität: 03.10.1997 US 943320
(71) Anmelder: Dinulescu, Horia A., Minnetonka, Minnesota 55305 (US)
(72) Erfinder: Dinulescu, Horia A., Minnetonka, Minnesota 55305 (US)
(74) Vertreter: Kahlhöfer, Hermann, Dipl.-Phys.

(57) **Zusammenfassung**

Die vorliegende Erfindung stellt Lösungen zur Verfügung, die eine gute Wärmeübertragung insbesondere bei Verbindungsstellen von Teilen eines Wärmetauschers sicherstellt. Sie betrifft einen Wärmetauscher (1) für ein direktes Kühlungsverfahren in einem Großprozeß, insbesondere in einem Kraftwerksprozeß,
- mit einem ersten (2) und einem zweiten (3) metallenen Rohr mit jeweils abgeflachtem Querschnitt,
- mit einer Vielzahl von metallenen ersten Finnen (5.1), die außen zumindest im abgeflachten Bereich (9) an dem ersten Rohr (2) befestigt sind,
wobei zwischen dem ersten Rohr (2) und den ersten Finnen (5.1) ein erstes wärmeleitendes Bauteil angeordnet ist. Auch wird ein Wärmetauscher geschaffen, der zwischen den ersten (5.1) und den zweiten (5.2) Finnen ein erstes wärmeleitendes Bauteil (4.1) angeordnet hat, an dem jeweils eine zweite Seite (10) der Struktur (6) der Finnen befestigt ist, wobei das Bauteil (4.1) zumindest einen Vollquerschnitt hat.

Auch betrifft die Erfindung Verfahren zur Fertigung eines derartigen Wärmetauschers sowie eine Vorrichtung zur Fertigung eines Wärmetauschers für Großprozesse.

## Beschreibung

Die Erfindung betrifft Wärmetauscher für ein direktes Kühlungsverfahren in einem Großprozeß, insbesondere in einem Kraftwerksprozeß,
- mit einem ersten und einem zweiten metallenen Rohr mit jeweils abgeflachtem Querschnitt,
- mit einer Vielzahl von metallen ersten Finnen, die außen zumindest im abgeflachten Bereich an dem ersten Rohr befestigt sind,
- mit einem Einlaß und einem Auslaß jeweils am ersten und am zweiten Rohr für ein durchströmendes erstes Fluid.
Die Finnen sind auf dem Rohr zur Anströmung durch ein zweites Fluid angeordnet, wobei die ersten Finnen eine zick-zack-ähnliche, wellenähnliche oder V-ähnliche Struktur aufweisen. Die Finnen sind auch mit einer ersten Seite der Struktur entlang ihrer Berührung zum ersten Rohr befestigt. Auch betrifft die vorliegende Erfindung Verfahren zur Herstellung eines Wärmetauschers sowie eine Vorrichtung zur Fertigung eines Wärmetauschers.

Wärmetauscher der vorliegenden Gattung sind aus der US 4,949,543 bekannt. Sie werden in einem direkten Verfahren zur Kühlung des Kondensats in einem Kraftwerksprozeß angesetzt. Diese Wärmetauscher weisen ein abgeflachtes Rohr auf, an dessen beiden abgeflachten Seiten jeweils eine Finne angebracht ist. Mehrere dieser Rohre mit Finnen zusammen mit Zuund Ableitungen bilden den luftgekühlten Kondensator aus. Zwischen den Finnen befindet sich jeweils ein Abstand, der vorteilhafterweise mit etwa als 1/16 inch angegeben wird. Die Verbindung der Finnen an die Rohre im abgeflachten Teil erfolgt durch Löten. Die Rohre sind dazu mit einer aluminiumhaltigen Beschichtung versehen. Die Finnen, die aus Aluminium bestehen, weisen an ihrer Oberfläche eine Aluminiumschicht auf, die eine Lötlage ist. Diese Lötlage verbindet sich mit der Aluminiumbeschichtung des Rohres während des Lötvorganges und soll so ein besonders gute Verbindung zwischen Rohr und Finne erzeugen.

Aus der US 5,490,559 ist ein Wärmetauscher bekannt, bei dem zwischen zwei abgeflachten Rohren ein extrudierter, Kanäle bildender Körper angeordnet ist. Dieser Körper hat parallel zueinander verlaufende Stege zur Wärmeabführung eines diese Stege umströmenden Luftstromes. Der extrudierte Körper ist an seiner Ober- und Unterseite jeweils mit einem Rohr verbunden. Die Festigkeit der dort offenbarten Konstruktion wird mittels des extrudierten Rippenkörpers erzielt. Aus der U.S. 5,490,559 ist weiterhin eine Übersicht über verschiedene Typen von Wärmetauscherkonstruktionen bekannt, wobei der dort gezeigte Grundaufbau der Wärmetauscheranlage für Kraftwerksprozesse einsetzbar ist oder aber auch bei anderen Prozessen, bei denen ein vergleichbarer Wärmeaustausch sichergestellt sein muß.

Aufgabe der vorliegenden Erfindung ist es nun, einen Wärmetauscher zu schaffen, der eine besonders gute Wärmeleitfähigkeit aufweist. Vorzugsweise soll auch eine besondere Festigkeit bei gleichzeitiger Verwendung großer Rippenamplituden ermöglicht werden. Weiterhin soll ein Verfahren zur Herstellung eines Wärmetauschers zur Verfügung gestellt werden, welches eine gute Wärmeleitfähigkeit bei hoher Festigkeit der Verbindungen des Wärmetauschers ermöglicht sowie möglichst auch eine besondere Stabilität des Wärmetauschers bei Einsatz von Rippen großer Amplitude aber dünner Materialdicke sicherstellt, wobei die Fertigung gegenüber anderen bekannten Lösungen vorzugsweise noch vereinfacht werden soll. Für die Herstellung eines solchen Wärmetauschers soll auch eine geeignete Vorrichtung geschaffen werden.

Diese Aufgabe wird gelöst mit einem Wärmetauscher mit den Merkmalen des Anspruches 1 oder des Anspruches 6, mit einer Vorrichtung zur Fertigung eines Wärmetauschers mit den Merkmalen des Anspruchs 21, mit einem Verfahren zur Herstellung eines Wärmetauschers mit den Merkmalen des Anspruches 33 und mit einem Verfahren zur Herstellung eines Wärmetauschers mit den Merkmalen des Anspruches 39. Auch wird die Aufgabe mit einem Verfahren zur Herstellung eines Wärmetauschers für den Großapparatebau mit den Merkmalen des Anspruches 50 gelöst.

Ein Wärmetauscher für ein direktes Kühlungsverfahren in einem Großprozeß, insbesondere in einem Kraftwerksprozeß,
- mit einem ersten und einem zweiten metallenen Rohr mit jeweils abgeflachtem Querschnitt,
- mit einer Vielzahl von metallenen ersten Finnen, die außen zumindest im abgeflachten Bereich an dem ersten Rohr befestigt sind,
- mit einem Einlaß und einem Auslaß jeweils am ersten und am zweiten Rohr für ein durchströmendes erstes Fluid,
- mit einer Anordnung der Finnen auf dem Rohr zur Anströmung durch ein zweites Fluid, wobei die ersten Finnen eine zick-zack-ähnliche, wellenähnliche oder V-ähnliche Struktur aufweisen und mit einer ersten Seite der Struktur entlang ihrer Berührung zum ersten Rohr befestigt sind,
   hat zwischen dem ersten Rohr und den ersten Finnen ein erstes warmeleitendes Bauteil angeordnet.

Das wärmeleitende Bauteil ermöglicht durch seinen Kontakt zwischen dem ersten Rohr und den ersten Finnen eine besonders gute Wärmeübertragung. Dieser Kontakt kann mittels Verwendung eines geeigneten Materials so angepaßt sein, daß eine größtmögliche Kontaktfläche für den Wärmeübergang zur Verfügung gestellt wird. Gleichzeitig unterstützt ein derartiger Aufbau auch die Festigkeit des Wärmetauschers, da nun die ansonsten zwischen dem Rohr und den Finnen direkt auftretenden Spannungen durch das wärmeleitende Bauteil aufgenommen und damit vergleichmäßigt übertragen werden. Zwischen dem ersten und einem zweiten Rohr des Wärmetauschers herrschen vorteilhafterweise Druckkräfte, was die Verbindung der Elemente des Wärmetauschers unterstützt. Das wärmeleitende Bauteil, beispielsweise ein Blech, leitet diese Druckkräfte auf einen größeren Abschnitt über, als es die Verbindungsstellen der Finne mit dem ersten Rohr in der Lage wären. Das erste Rohr unterliegt dann nicht der Gefahr, über seiner Länge unterschiedlichen Spannungen und vor allem Spannungsspitzen ausgesetzt zu sein, die über längeren Betriebszeiten sich unter Umständen ungünstig auswirken könnten. Zweckmäßigerweise wird die Materialdicke des Bauteiles von den sich einstellenden Spannungen aber auch der Materialdicke von Rohr und Finnen abhängig ausgelegt.

Die Verwendung des wärmeleitenden Bauteiles ermöglicht im weiteren die Verwendung unterschiedlicher Materialen mit jeweils unterschliedlichen Wärmeleitkoeffizienten. So erlaubt ein derartiger Aufbau die Verwendung eines stabilen Stahlrohres, auf das ein alumiumhaltiges Blech mit seinen guten wärmeleitenden Eigenschaften aufgebracht wird. Dieses wiederum sichert einen guten Wärmeübergang zu den am Blech befestigten Finnen, die vorteilhafterweise ebenfalls aus Aluminium sind.

Die Verwendung einer zick-zack-ähnlichen, wellenähnlichen oder V-ähnlichen Struktur, die an einer Seite am Rohr befestigt ist, gibt wiederum zum einen der Konstruktion des Wärmetauschers eine hohe Festigkeit zum anderen aber auch aufgrund der elastischen Eigenschaft dieser Strukturen eine gewisse Flexibilität zum Ausgleich von Wärme- oder z. B. Druckdehnungen.

Ein gezielter Aufbau eines ersten Endes des Wärmetauschers unterstützt zum einen die gute Wärmeleitfähigkeit des Wärmetauschers allgemein. Zum anderen wird eine besondere Festigkeit der Konstruktion des Wärmetauschers ermöglicht, die die elastischen Eigenschaften der Strukturen ausnutzt. Dieses wird mit einem Aufbau mit der folgenden Reihenfolge erzielt:
- erstes Rohr,
- wärmeleitendes Bauteil und
- erste Finnen.

Am Ende des Wärmetauschers müssen die Spannungen, die innerhalb seiner Konstruktion im Betrieb entstehen oder konstruktionsbedingt schon vorliegen, aufgenommen und gegebenfalls weitergeleitet werden, so daß die Betriebssicherheit auch unter ungünstigsten Rahmenbedingungen gewährleistet bleibt. Der oben angeführte Aufbau des ersten Endes des Wärmetauschers erlaubt nicht nur eine gute Wärmeübertragung sondern unterstützt die Festigkeit der Wärmetauscherkonstruktion.

Bei Verwendung eines Wärmetauschers, der ein erstes und ein zweites Ende aufweist, ergibt sich ein positiver Effekt, wenn beide Enden den gleichen Aufbau wie oben angeführt haben. Die Festigkeit der Konstruktion wird dadurch noch gesteigert, insbesondere, wenn beide Enden, auf einer Gerade liegend, sich gegenüberliegen. Druckspannungen zwischen den einzelnen Bestandteilen des Wärmetauschers sind besser beherrschbar und die gefährdeten Enden können ohne Einbuße auf Kosten der Wärmeübertragung in der Konstruktion mit anderen Rohren und Finnen des Wärmetauschers übereinstimmen.

Weiterhin ermöglicht die Anordnung des wärmeleitenden Bauteiles zwischen dem ersten Rohr und den Finnen auch den Einsatz verschiedenster Verbindungstechniken allein und insbesondere auch in Kombination. Das erste Rohr und das wärmeleitende Bauteil können miteinander verklebt oder weichgelötet sein, das wärmeleitende Bauteil und die Finnen können miteinander hartgelötet sein. Je nach auftretenden Belastungen kann der gesamte Wärmetauscher auch in seinen wesentlichen Verbindungen allein geklebt, weich- oder hartgelötet sein, wobei aufgrund der Größe des Wärmetauschers auch immer die Dimensionen der Verbindungen zu berücksichtigen sind.

Ein weiterer erfindungsgemäßer Wärmetauscher für ein direktes Kühlungsverfahren in einem Großpozeß, insbesondere in einem Kraftwerksprozeß,
- mit einem ersten und einem zweiten metallenen Rohr mit jeweils abgeflachtem Querschnitt,
- mit einer Vielzahl von metallenen ersten Finnen, die außen zumindest im abgeflachten Bereich an dem ersten Rohr befestigt sind,
- mit einer Vielzahl von metallenen zweiten Finnen, die außen zumindest im abgeflachten Bereich an dem zweiten Rohr befestigt sind,
- mit einem Einlaß und einem Auslaß jeweils am ersten und am zweiten Rohr für ein durchströmendes erstes Fluid,
- mit einer Anordnung der Finnen auf dem Rohr zur Anströmung durch ein zweites Fluid, wobei die Finnen eine zick-zack-ähnliche, wellenähnliche oder V-ähnliche Struktur aufweisen und mit einer ersten Seite der Struktur entlang ihrer Berührung zum Rohr befestigt sind, hat zwischen den ersten und den zweiten Finnen ein erstes wärmeleitendes Bauteil angeordnet, an dem jeweils eine zweite Seite der Struktur der Finnen befestigt ist, wobei das Bauteil zumindest einen Vollquerschnitt hat.

Durch den Kontakt des wärmeleitenden Bauteiles zu den zweiten metallenen Finnen ist ein Temperaturgradient zwischen zwei gegenüberliegenden Rohren besser ausgleichbar. Die Effizienz des Wärmetauschers wird dadurch gesteigert. Das wärmeleitende Bauteil kann dem weiter oben erwähnten entsprechen. Durch Anordnung des wärmeleitenden Bauteiles zwischen den ersten und den zweiten Finnen wird insgesamt die Wärmeverteilung und Wärmeabgabe des Wärmetauschers verbessert. Gleichzeitig wird eine hohe Festigkeit ermöglicht, die es gestattet, die Finnenkonstruktion äußerst frei zu wählen. Insbesondere kann eine große Amplitudenhöhe der Struktur der Finnen gewählt werden, ohne dafür die Materialdicke der Finnen erhöhen zu müssen. Das wärmeleitende Bauteil kann zumindest teilweise aus Vollmaterial sein, aus Schichten aufgebaut sein oder ist ein Blech, welches dann zwischen den Finnen angeordnet ist. Ein aufgrund seiner hohen Wärmeleitfähigkeit besonders bevorzugter Werkstoff für das wärmeleitende Bauteil und/oder die Finnen ist Aluminium.

Weiterhin erlaubt die Anordnung des wärmeleitenden Bauteiles zwischen zwei Rohren eine Unterteilung der Finnen. Die zweiten metallenen Finnen sind dadurch den ersten Finnen gegenüber oder seitlich zuordbar. Dadurch ergibt sich ein Lagenaufbau an Finnen zwischen den Rohren. Dieser Lagenaufbau entlang des abgeflachten Rohres ergibt durch Verwendung dieser quasi Finnenpakete vorteilhafte mechanische Eigenschaften, beispielsweise eine hohe Flexibilität und Dehnungsfähigkeit bei großen Temperaturgradienten. Durch Verwendung einer geeigneten Struktur sind die ersten und zweiten Finnen flexibler als das erste und das zweite Rohr. Wird nun das wärmeleitende Bauteil eingesetzt, gelingt es, Schwingungen, wie sie bei einer Konstruktion eines luftgekühlten Kondensators in A-Anordnung auftreten können, zu unterdrücken. Eigenschwingungsfrequenzen des ausgebildeten Wärmetauschersystemes sind im Zusammenspiel mit der Verwendung von Finnenpaketen weiterhin in Bereiche verschiebar, die im Betrieb des Wärmetauschers nicht auftreten. Zur Sicherung der Stabilität des Wärmetauschers bedarf es daher nur noch weniger Verstrebungen und Abstützungen.

Das wärmeleitende Bauteil ist vorzugsweise so ausgelegt, daß es Spannungen zwischen dem ersten und dem zweiten Rohr ausgleichen kann. Da vorteilhafterweise die Struktur der Finnen so gewählt ist, daß diese ein elastischeres Verhalten als die Rohre in der Stapelrichtung haben, das wärmeleitende Bauteil wiederum zwischen den Finnen angeordnet ist, hat dieses entsprechend einer Ausgestaltung die Fähigkeit, den Spannungsausgleich durch Verformung auszugleichen. Die Verformbarkeit ist durch Auswahl einer geeigneten Materialstärke sowie des Materials für das Bauteil einstellbar. Die Verformung kann elastisch oder, bei Überschreiten eines Grenzwertes, auch plastisch sein, wobei ein plastisches Verhalten erst dann auftreten sollte, wenn Extrembelastungen an der Wärmetauscherkonstruktion auftreten.

Eine weitere vorteilhafte Ausgestaltung des Wärmetauschers sieht bei Verwendung von Finnenpaketen vor, daß ein zweites zusätzliches wärmeleitendes Bauteil zwischen diesen Paketen in Kontakt mit dem ersten und dem diesen gegenüberliegenden zweiten Rohr ist. Einerseits ermöglicht dies die Verwendung besonders langer Rohre, da das wärmeleitende Bauteil als Versteifüng dient. Andererseits dient das wärmeleitende Bauteil als Abstützung der Finnenpakete und ermöglicht gleichzeitig einen verbesserten Wärmefluß zwischen diesen.

Der Wärmetauscher ist aus vorteilhafterweise mehreren Lagen aufgebaut, wobei eine Lage ein Rohr, erste und zweite Finnen und ein wärmeleitendes Bauteil hat. Diese Modulbauweise ermöglicht mit wenigen Komponenten eine hohe Anzahl an verschiedensten Ausführungen von Wärmetauschern und Wärmetauscherleistungen ausführen zu können. Die Variabilität aufgrund der Verwendung von Finnenpaketen eröffnet weiterhin die Anpassung der Wärmeleiteigenschaft verschiedener Bereiche des Wärmetauschers an die jeweils bekannten bzw. berechneten ab- bzw. zuzuführenden Wärmeströme. So können unterschiedliche Finnen genauso wie unterschiedlich dimensionierte Finnen gleichzeitig in einem Wärmetauscher verwendet werden.

Durch die konstruktive Ausgestaltung des Wärmetauschers gelingt es, daß das erste Rohr auch für einen Überdruck ausgelegt werden kann, der in seinem Inneren herrscht. Durch die konstruktive Ausgestaltung werden die Druckkräfte durch das Wärmetauschersystem mitaufgefangen. Die Rohrdicke kann daher geringer gehalten werden. Der Wärmetauscher wird vorteilhafterweise so ausgelegt, daß er einem Überdruck von mindestens zwei bar standhält. Dadurch ist dieser Wärmetauscher nicht nur als luftgekühlter Kondensator sondern auch in anderen Bereichen mit höheren Drücken in einem Kraftwerksprozeß einsetzbar. Ein weiterer Vorteil der Druckfestigkeit des Wärmetauschers ist, daß bei plötzlich auftretenden Druckspitzen wie sie beinem Rückschlag auftreten können, keine Gefahr bezüglich eines Versagens der Konstruktion besteht.

Der lagenweise Aufbau des Wärmetauschers bietet neben Fertigungsvorteilen einen besonders guten Wärmeabfluß. Bei einem Kühlprozeß ist es daher energetisch vorteilhaft, wenn der Wärmetauscher an einen Kreislauf für das erste Fluid direkt angeschlossen, um die hohe Effizienz des Wärmetauschers ohne Verluste nutzen zu können.

Ein Wärmetauscher mit besonders guten Wärmeleitungseigenschaften bei äußerst hoher Stabilität wird erzielt, wenn der Wärmetauscher zwischen mindestens ersten und zweiten Finnen ein Lotblech ("brazing sheet") und zwischen dem ersten Rohr und den ersten Finnen ein aluminiumhaltige Platte hat. Das Lotblech ist vorteilhafterweise eines, wie es aus "Aluminum Brazing Handbook", 4.Auflage, Januar 1990, The Aluminum Association, auf Seite 30 hervorgeht. Die Finnen weisen zumindest überwiegend einen über 90prozentigen Aluminumgehalt auf.

Eine besonders gute Festigkeit und Wärmeleitfähigkeit des Wärmetauschers ergibt sich ebenfalls, wenn das erste Rohr aus Metall ist und aufplattiertes Aluminium aufweist. Die Verbindung zwischen dem Metall und dem aufplattierten Aluminium ist besonders fest und ermöglicht einen guten Wärmeübergang. Weiterhin läßt sich die Dicke des aufplattierten Aluminiums genau festlegen, womit die Anbindung von Aluminiumfinnen beim Lötvorgang sichergestellt ist. Ein weiterer Vorteil ist die Einsparung eines Arbeitsganges.

Bei der Herstellung des ersten Rohres wird besonders ein Stahlblech mit aufplattiertem Aluminium verwendet. Dieses wird zugeschnitten und zu einem Rohr weiterverarbeitet. Eine nachträgliche Aufbringung einer Aluminiumbeschichtung entfällt. Für das Löten hat es sich allerdings auch als vorteilhaft erwiesen, auf dem aufplattierten Aluminium weiterhin eine aluminiumhaltige Schicht aufzubringen. Diese aluminiumhaltige Schicht weist einen geringeren Aluminiumgehalt auf als das aufplattierte Aluminium. Die Verbindung FinneRohr ist dadurch besonders gut herstellbar, denn während das aufplattierte Aluminium die Verbindung zum Metall, insbeondere Stahl, sicherstellt, dient die aluminiumhaltige Schicht als Lotmittel und damit Verbindung zur Finne. Die Finne weist vorteilhafterweise ebenfalls plattiertes Aluminium auf, was eine besonders haltbare Verbindung zwischen den einzelnen Materialien schließlich sicherstellt.

Entsprechend einem weiteren Gedanken der Erfindung wird daher auch ein Verfahren zur Herstellung eines Wärmetauschers für den Großapparatebau, insbesondere für einen Kraftwerksprozeß
- mit einem ersten metallenen Rohr mit abgeflachtem Querschnitt,
- mit einer metallenen ersten Finne auf einer äußeren Oberflächen des ersten Rohres, wobei die erste Finne dort befestigt ist,
- mit einem Einlaß und einem Auslaß für ein erstes Fluid,
- mit einer Anordnung der ersten Finne auf dem Rohr zur Anströmung durch ein zweites Fluid,
zur Verfügung gestellt, bei dem als erstes Rohr ein metallenes Rohr verwendet wird, das mit Aluminium plattiert ist. Vorzugsweise wird das metallene Rohr aus einem mit Aluminium plattierten Blech hergestellt, welches zu einem ersten Rohr geformt wird. Das Grundmaterial des plattierten Bleches ist abhängig von dem durch das spätere Rohr durchfließenden Fluid und den Betriebsbedingungen abhängig auswählbar. Für einen luftgekühlten Kondensator in einem Kraftwerksprozeß wird vorteilhafterweise ein Stahlblech mit einer Dicke zwischen 2,5 und 1 mm, insbesondere 1,5 mm, mit Aluminium plattiert. Das verwendete Aluminium weist vorzugsweise einen mindestens 90 prozentigen Aluminiumanteil, insbesondere 99 prozentigen Aluminiumanteil auf. Dieser Gehalt hat sich bei der herzustellenden Verbindung zwischen Rohr und Finnen als äußerst haltbar erwiesen. Die Aufplattierung aus Aluminium weist etwa eine Dicke zwischen 20 und 100µm, insbesondere 50µm auf, wodurch zum einen eine ausreichend Dicke der Aufplattierung für die Verbindung und Wärmeübertragung zur Verfügung gestellt ist und zum anderen es keine Probleme bei der Aufplattierung selbst gibt.

Eine bevorzugte Verbindung von Rohr und Finnen wird durch Verwendung eines mit Aluminium plattierten Stahlrohres erzielt, auf das Finnen aus Aluminium aufgesetzt werden. Das Aluminium der Finnen hat vorzugsweise einen mindestens 90 prozentigen Aluminiumanteil, insbesondere 99 prozentigen Aluminiumanteil. Das auf das Stahlrohr aufplattierte Aluminium weist vorteilhafterweise Silizium auf bzw. hat einen niedrigeren Schmelpunkt als das Aluminium der Finnen. Auf diese Weise gelingt es, einen Wärmetauscher herzustellen, der aufgrund der Einsetzbarkeit von Finnen aus reinem Aluminium erhebliche Kostenvorteile gegenüber anderen Lösungen hat.

Eine besonders haltbare Verbindung zwischen aufzubringenden Finnen und Rohr ergibt sich, wenn auf das aufplattierte Aluminium eine aluminiumhaltige Schicht aufgebracht wird, wobei die aluminiumhaltige Schicht einen geringeren Aluminiumgehalt aufweist als das aufplattierte Aluminium. Dieses erlaubt, den Kontakt und damit den Wärmeübergang zwischen Finnen und Rohr zu vergrößern. Insbesondere kann auch eine aluminiumhaltige Schicht verwendet werden, die einen geringeren Aluminiumgehalt und einen geringeren Schmelzpunkt als das aufplattierte Aluminium aufweist. Dadurch ergeben sich beim Herstellen der Verbindung Vorteile bezüglich der Ausbildung von Schichten und gegebenenfalls intermetallischen Phasen, die für einen guten Wärmeübergang damit gezielt einstellbar sind.

Einem weiteren Gedanken der Erfindung folgend, weist eine Vorrichtung zur Fertigung eines Wärmetauschers für den Großapparatebau eine Aufnahme mit einer Länge von mindestens einem Meter, insbesondere über fünf Meter, bevorzugt um die zehn Meter, für eine Anzahl von miteinander zu verbindenden abgeflachten Rohren und Finnen auf. Die Vorrichtung hat eine Verspanneinrichtung, mit der die Rohre und die Finnen untereinander in der Aufnahme unter Druck zu setzen sind.

Die Aufnahme ist vorteilhafterweise so gestaltet, daß mehrere Rohre und Finnen in bestimmter Reihenfolge in regelmäßig sich wiederholenden Intervallen einzusetzen sind. Insbesondere ist die Aufnahme so ausgelegt, daß ein oben beschriebenes wärmeleitendes Bauteil zwischen einem Rohr und Finnen, zwischen Finnen oder zwischen einem Rohr und Finnen und zwischen Finnen einzusetzen ist. Die Verspanneinrichtung, die in der Lage ist, diese Lagen unter Druck zu setzen, weist vorteilhafterweise ein Federsystem zur Druckerzeugung auf. Diese auf mechanischem Wege erzeugbare Druckkraft läßt sich äußerst genau einstellen, wodurch ein Druckverbindungsverfahren, insbesondere ein Drucklötverfahren, in der Vorrichtung zur Fertigung eines Wärmetauschers möglich ist.

Eine weitere vorteilhafte Ausgestaltung der Vorrichtung weist eine Verspannvorrichtung mit zwei Führungsstangen auf. Zwischen diesen sind die Rohre und Finnen anordbar, wobei der Druck durch einen entlang der FührungsStangen verfahrbaren Backen übertragen wird. Die einzelnen Lagen aus Rohren und Finnen können in dieser Vorrichtung entsprechend einer bevorzugten Ausführung miteinander verlötet. Eine weitere Möglichkeit der Nutzung der Vorrichtung besteht darin, daß die Lagen verliebt werden. Dazu weist die Vorrichtung eine Heizeinrichtung zur Aufheizung von Rohren und Finnen in der Aufnahme auf. Diese Heizeinrichtung ist so ausgerichtet, daß sie ihre Energie auf eine Oberseite der Aufnahme richtet und auf eine der Oberseite gegenüberliegenden Unterseite der Aufnahme. Dadurch gelingt es, eine gleichmäßige Erhitzung der Lagen und somit auch eine gleichmäßige, gut warmeübertragende haltbare Lötung zu erzeugen.

Die Heizeinrichtung weist in einer Weiterbildung eine erste und eine zweite Wärmequelle auf, die entsprechend an der Oberseite bzw. Unterseite zur Aufnahme angeordnet sind. Auf diese Weise laßt sich die Temperaturverteilung besonders gut steuern.

Die Heizeinrichtung ist beispielsweise bei Verwendung eines Klebers in der Lage, die Wärme so gezielt aufzubringen, daß der Kleber zügigst aushärten kann. Als Kleber sind beispielsweise Metallkleber mit einer guten Wärmeleitfähigkeit einsetzbar. Für andere Verbindungsverfahren von Finnen und Rohren ist die Heizeinrichtung in der Lage, die entsprechenden Temperaturen zur Verfügung zu stellen, beispielsweise zum Weich- und/oder Hartlöten. Die Heizeinrichtung ist auch so konstruiert, daß gerade die zu verbindenden Stellen gerichtet beheizt werden. Die Beheizung kann mittels Wärmestrahlung oder aber auch mittels indirekter Verfahren wie Mikrowellen, Induktion oder ähnlichem erfolgen So kann man auch das Kleben, welches auch ohne Wärmezufuhr durchgeführt werden kann, zusammen mit dem Weichlöten als ein Niedertemperaturverbindungsverfahren definieren gegenüber beispielsweise dem Hartlöten als ein Hochtemperaturverbindungsverfahren.

Um die Gleichmäßigkeit, damit den Wärmeübergang, und die Haltbarkeit der Verbindungen von Rohren und Finnen bei den unterschiedlichen Verbindungsarten sicherzustellen, hat die Vorrichtung eine Abdeckung für die Aufnahme. Dieses erlaubt eine Aufrechterhaltung einer vorgebbaren Gasatmosphäre in der Aufnahme, die unerwünschte Reaktion verhindert. Die Gasatmosphäre ist beispielsweise eine Inertgasatmosphäre mit hohem Stickstoffanteil. Zur Erzeugung und/oder zur Aufrechterhaltung der vorgegebenen Gasatmosphäre hat die Vorrichtung weiterhin eine geeignete Eirrichtung. Diese kann Gasflaschen sowie Mischbatterien aber auch eine Permeationsanlage haben, abhängig auch davon, wo der Wärmetauscher gebaut wird.

Eine vorteilhafte Weiterbildung dieser Vorrichtung weist eine Druckvorrichtung auf, mit der in den Rohren ein Innendruck erzeugt wird. Während beispielsweise einer Drucklötung von Finnen und Rohren sind durch die Verspanneinrichtung höhere Drücke aufbringbar, da der in den Rohren vorhandene Gegendruck einen Ausgleich schafft. Besonders vorteilhaft ist dieses auch bei einer Verbindung eines wärmeleitendes Bauteiles mit einem Rohr oder mit Finnen, da auch dessen Anbindung aufgrund des höheren Druckes verbessert werden kann.

Gemäß einem weiteren Gedanken der Erfindung wird ein Verfahren zur Herstellung eines Wärmetauschers geschaffen, wobei der Wärmetauscher metallene, abgeflachte Rohre und daran befestigte Finnen aufweist. Das Verfahren hat die folgenden Schritte:
- Nebeneinanderreihen der Rohre und Finnen zu einem losen Stapel, wobei die Finnen zu zwei Seiten kontaktiert werden und
- Aufbringen von Druck auf den losen Stapel, so daß Berührungsflächen von Rohren und Finnen des losen Stapels unter Druck stehen und
- Verbinden der Berührungsflächen von Rohren und Finne des losen Stapels zu einem festen Verbund während der Aufbringung des Drukkes, so däß der feste Verbund später als Wärmetauscher eingesetzt werden kann.

Insbesondere durch eine Vorrichtung, wie sie oben beschrieben worden ist, läßt sich der Druck vorteilhafterweise erzeugen. Nach diesem Verfahren läßt sich auch ein oben beschriebener Wärmetauscher besonders bevorzugt herstellen. Das Verfahren ergibt besonders gleichmäßige Verbindungsstellen, wie sie ansonsten bei den großen Dimensionen von Wärmetauschern für den Großapparatebau nur schwer zu verwirklichen sind. Da der Wärmeübergang bei den zahlreichen Verbindungen an den Berührungsflächen aber eine wichtige Rolle für die Gesamteffizienz des Wärmetauschers spielt, wird durch das Verfahren die Wärmeleistung des Wärmetauschers nicht unwesentlich mitbeeinflußt.

Entsprechend einer hohen Haltbarkeit der Verbindung an den Berührungsflächen wird der feste Verbund vorzugsweise mittels Löten unter einer Schutzgasatmosphäre erzeugt. Als vorteilhaft hat es sich weiterhin erwiesen, daß in den Rohren ein Innendruck herrscht, der größer als die die Rohre umgebende Atmosphäre ist. Dadurch wird zum einen der Druck der Atmosphäre, insbesondere der Schutzgasatmosphäre, aber zum anderen auch der durch die Vorrichtung mechanisch aufgebrachte Druck möglichst ausgeglichen. Ein Verziehen der Rohre durch Aufbringen dieses Druckes kann dadurch verhindert werden. Der Innendruck in den Rohren ermöglicht auch die Verwendung von Herstellungsparametern wie Temperatur, Materialdicke oder auch mechanischen Druck, die ansonsten eher die Gefahr einer ungleichmäßigen Verbindung hervorrufen könnten.

Einem weiteren Gedanken der Erfindung folgend, der insbesondere auch für das oben genannte Verfahren zur Herstellung des Wärmetauscher einsetzbar ist, besteht darin, daß vor einem Nebeneinanderreihen von Finnen erste und zweite Finnen an einem wärmeleitenden Bauteil insbesondere zwischen den ersten und den zweiten Finnen angeordnet wird. Vorzugsweise werden diese an dem Bauteil befestigt, beispielsweise über eine Nietung, eine Verklammerung oder einem anderen Verbindungsverfahren, welche ein Verschieben der lang dimensionierten Finnen zu dem Bauteil verhindern. Diese miteinander verbundenen ersten Finnen und zweiten Finnen mit dazwischen liegendem wärmeleitenden Bauteil, auch "cake" gennant, erlaubt eine Reduzierung von Fertigungszeiten und Fertigungskosten, wobei über diese Vorverbindung auch eine gleichmäßige weitere Behandlung des "cake" beispielsweise zum Auftragen von Lot oder anderem möglich ist. Eine andere Möglichkeit, einen "cake" herzustellen, besteht darin, beispielsweise in einem Vakuumlötverfahren an eine Oberseite und an eine Unterseite von Finnen jeweils eine flache Platte anzulöten, beispielsweise ein Blech aus Aluminium, wenn die Finnen ebenfalls aus Aluminium hergestellt sind.

Ein weiteres vorteilhaftes erfindungsgemäßes Verfahren hat zur Herstellung eines Wärmetauschers einen ersten und einen zweiten Schritt zur Verbindung von Teilen des Wärmetauschers:
- im ersten Schritt werden erste Teile miteinander in ersten Verbindungsverfahren verbunden, bei dem eine erste Temperatur während des Verbindungsverfahren eingesetzt wird, und
- im zweiten Schritt werden die ersten miteinander verbundenen Teile mit mindestens einem zweiten Teil mittels eines zweiten Verbindungsverfahrens verbunden, wobei während des zweiten Verbindungsverfahrens eine zweite Temperatur eingesetzt wird, die kleiner als die erste Temperatur ist.

Auf diese Weise können neben unterschiedlichen Materialien auch ganz unterschiedliche Parameter jeweils während der beiden Verbindungsverfahren eingesetzt werden und für jede Verbindung die bestmögliche Auswahl getroffen werden. Auf diese Weise läßt sich die Verbindung zwischen den verschiedenen Teilen so abstimmen und ausführen, daß jede Verbindung jeweils entsprechend einem bestmöglichen Wärmeübergang ausgeführt werden kann. Beispielsweise erlaubt das Verfahren, daß die erste Temperatur nahe zu einer Schmelzpunkttemperatur eines Materials der ersten Teile gebracht wird. Das Material des zweiten Teils, das beipielsweise einen niedrigeren Schmelzpunkt als das erste Teil hat, bleibt dann durch das erste Verbindungsverfahren nicht beeinträchtigt.

Bei einer vorteilhaften Ausbildung des Verfahrens wird im ersten Schritt hartgelötet. Eine Weiterbildung sieht vor, daß im zweiten Schritt weichgelötet oder geklebt wird. Das erste wie auch insbesondere auch das zweite Verbindungsverfahren können dadurch erweitert werden, däß Druck auf die zu verbindenden Teile mittels einer Vorrichtung aufgebracht wird, insbesondere mittels einer oben beschriebenen Vorrichtung. So lassen sich durch das Verfahren die Vorteile, die schon oben bei einzelnen Aspekten beschrieben wurden, durch das Verfahren miteinbinden.

Bevorzugt wird eine Weiterbildung des Verfahrens eingesetzt, wobei im ersten Schritt Finnen verbunden werden, die eine Struktur mit einer ersten und einer zweiten Seite haben, wobei jede Seite jeweils mit einem Teil verbunden wird. Die Finnen können mit einem oder mehreren wärmeleitenden Bauteilen wie auch mit einem Rohr verbunden werden. Als vorteilhaft hat es sich erwiesen, daß Finnen aus Aluminium und Lotblech ("brazing sheet") als Teile verwendet werden. Gemäß einer Weiterentwicklung des Verfahrens werden im ersten Schritt erste und zweite Finnen verwendet, zwischen denen das wärmeleitende Bauteil angeordnet wird, insbesondere das Lotblech ("brazing sheet"), über das die Finnen miteinander verbunden werden. Vorteilhaft ist es, wenn im zweiten Schritt die ersten Teile mit einem Stahlrohr verbunden werden. Die Verwendung des Stahlrohres erlaubt die Verbindung guter Wärmeleiteigenschaften mit hoher Stabilität der Konstruktion. Das Verfahren eignet sich besonders zur Herstellung der eingangs erwähnten Wärmetauscher, da es in der Lage ist, den großen Dimensionen und damit verbundenen Fertigungsbedingungen für einen gleichmäßigen Wärmeübergang zwischen Teilen der Wärmetauscher gerecht werden zu können.

Weitere vorteilhafte Ausgestaltungen, Weiterbildungen und Merkmale der Erfindung sind in der folgenden Zeichnung angegeben. Es zeigen:
- Fig. 1: einen erfindungsgemäßen Wärmetauscher,
- Fig. 2: einen Querschnitt durch einen Teil des Wärmetauschers aus Fig. 1,
- Fig. 3: einen Ausschnitt aus einen weitern Wärmetauscher,
- Fig. 4: eine Prinzipskizze einer Lötung mit einem speziellen Flußmittel,
- Fig. 5: einen Querschnitt durch einen Wärmetauscher mit wärmeleitendem Bauteil,
- Fig. 6: einen Wärmetauscher mit zwei wärmeleitenden Bauteilen zwischen zwei Rohren,
- Fig. 7: ein Ende eines Wärmetauschers im Querschnitt,
- Fig. 8: ein Rohr mit aufplattiertem Aluminium,
- Fig. 9: ein Schema zur Herstellung eines metallenen Rohres mit aufplattiertem Aluminium,
- Fig. 10: eine Prinzipskizze einer Vorrichtung zur Fertigung eines Wärmetauschers,
- Fig. 11: eine weiter schematische Darstellung dieser Vorrichtung,
- Fig. 12: eine Verbindung zwischen einem Rohr und einer Finne im Querschnitt,
- Fig. 13: erste Teile bei einem ersten Schritt eines Verfahrens zur Herstellung eines Wärmetauschers,
- Fig. 14: ein Prinzip eines zweiten Schrittes des Herstellungsverfahrens nach Fig. 13,
- Fig. 15: einen sogenannten "cake" mit oberen und unteren Finnen und dazwischen angeordnetem wärmeleitenden Bauteil,
- Fig. 16: Dimensionen eines Wärmetauschers, der in einem Kraftwerksprozeß einsetzbar ist und
- Fig. 17: weitere Abmaße dieses Wärmetauschers.

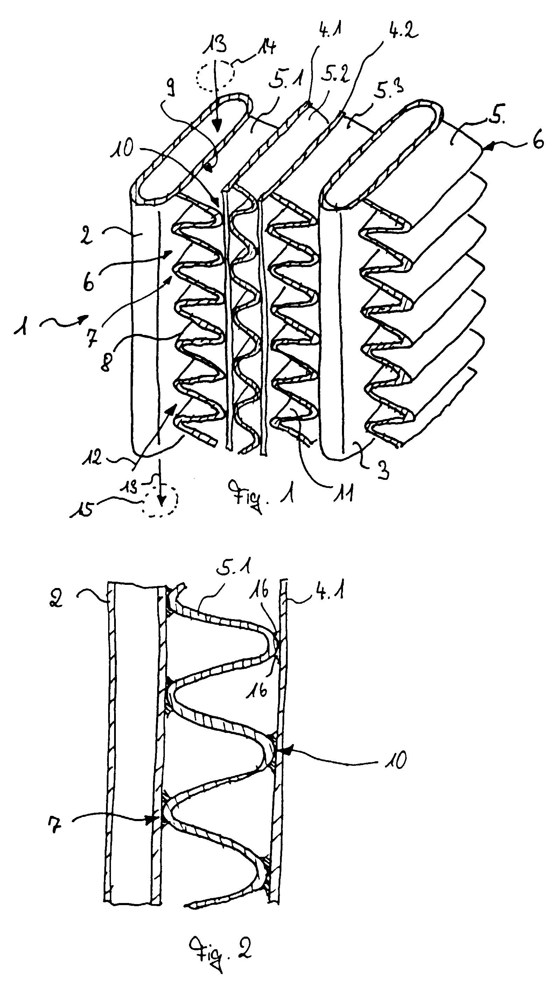

Fig. 1 zeigt einen Wärmetauscher 1 in einem Ausschnitt. Zwischen einem ersten metallenen Rohr 2 und einem zweiten metallenen Rohr 3 befinden sich jeweils eine Vielzahl von Finnen 5. Die Finnen 5 weisen eine Struktur 6 auf, die hier wellenförmig ist. Eine erste Seite 7 der Struktur 6 der Finne 5.1 ist entlang ihrer Berührung 8 am ersten Rohr 2 befestigt und zwar in einem abgeflachten Bereich 9. Eine zweite Seite 10 der Struktur 6 der Finne 5.1 ist an einem wärmeleitenden Bauteil 4.1, einem Lotblech, befestigt. Aufgrund der Struktur 6 entstehen somit Kanäle 11, durch die ein zweites Fluid 12 strömen kann, während durch das Innere des ersten Rohres 2 ein erstes Fluid 13 fließt. Beide Fluide 12, 13 sind jeweils durch Pfeile angedeutet. Das erste Fluid 13, welches über einen Einiaß 14 und einen Auslaß 15 durch das erste Rohr 2 strömt, ist im Falle eines luftgekühlten Kondensators der aus einer Dampfturbine stammende Abdampf, der wieder soweit gekühlt wird, daß der Dampf auskondensiert. Zwischen dem ersten Rohr 2 und dem zweiten Rohr 3 sind insgesamt drei Finnen 5.1, 5.2, 5.3 mit jeweils dazwischen angeordneten wärmeleitenden Bauteilen 4.1, 4.2 angeordnet. Dieses ermöglicht einen guten Wärmeübergang entlang der Kanäle. Die Struktur 6 der Finnen 5.1, 5.2, 5.3 kann dabei an die gewünschten Strömungsverhältnisse angepaßt werden. So können die in der Mitte liegenden Finnen 5.2 eine andere Wellung, andere Wellenamplitude oder ähnliches als die umgebenden Finnen 5.1, 5.2 haben, um so eine geeignete Wärmeübertragung sicherzustellen bzw. über eine Kanalgeometrie die Strömung beeinflussen zu können. Weisen die Kanäle der mittleren Finnen 5.2 eine Kleinere Querscbnittsgeometrie als die sie umgebenden Kanäle der Finnen 5.1, 5.3, so wird ein höherer Strömungswiderstand eingestellt, der die Aufspaltung des zweiten Fluides 12 auf die Kanäle beeinflußt.

Fig. 2 zeigt das erste Rohr 2 und das wärmeübertragende Bauteil 4.1 mit den dazwischenliegenden Finnen 5.1 im Querschnitt. Es zeigt, wie die erste Seite 7 der Struktur 6 sowie deren zweite Seite 10 jeweils an dem ersten Rohr 2 bzw. dem wärmeübertragenden Bauteil 4.1 mittels Lot 16 befestigt ist. Das erste Rohr 2 kann beispielsweise aus Stahl sein, die Finnen 5.1 können aus Aluminium gefertigt sein, beipielsweise entsprechend einem Lotblech ("brazing sheet"), wie es oben angegeben war.

Fig. 3 zeigt einen weiteren Ausschnitt aus einem Wärmetauscher entsprechend der Fig. 2. Der dargestellte Ausschnitt zeigt ein Stahlrohr 63, auf das eine Aluminumlegierung 64 aufplattiert wurde. Die Aluminiumlegierung 64 hat beipielsweise die Werkstoffnummer 4343 und enthält etwa zwischen 7% und 9% Silizium. Die Finnen 65 sind aus reinem Aluminium, daß heißt etwa mit 99.5 %er Reinheit an Aluminium. Als wärmeleitendes Bauteil ist ein Lotblech 66 ("brazing sheet") als Teiler für die Finnen verwendet worden, wobei das Lotblech 66 auf der Aluminiumlegierung 64 mittels Hartlötung befestigt ist. Die Hartlötung erfolgt unter Zuhilfenahme von Flußmittel ("flux") unter einer Stickstoffatmosphäre.

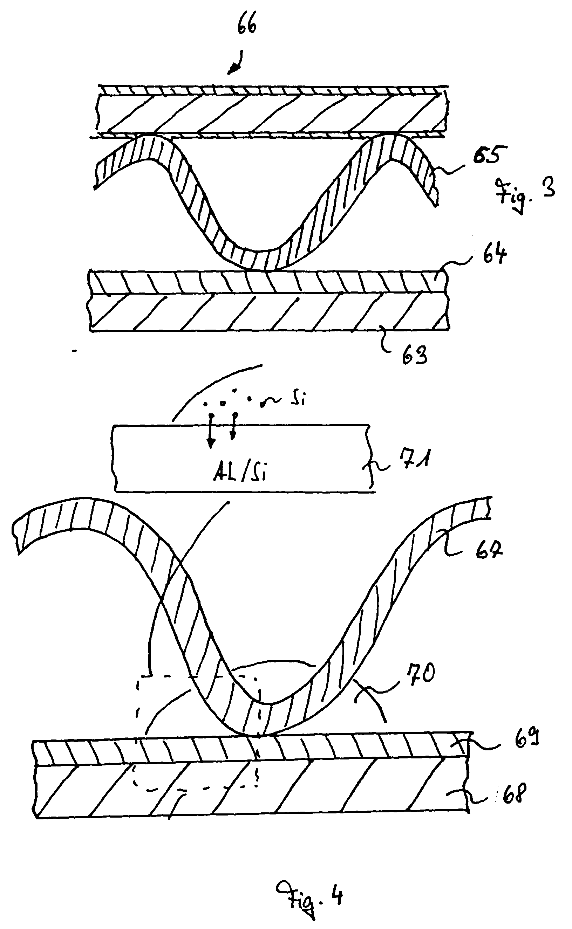

Fig. 4 zeigt ebenfalls einen Ausschnitt aus einem anderen Wärmetauscher. Die Finnen 67 sind wiederum aus reinem Aluminium hergestellt; auf einem Stählrohr 68 ist reines Aluminium 69 aufplattiert. Diesmal wird das Hartlöten jedoch mit einem speziellen Flußmittel 70 durchgeführt. Dieses Flußmittel 70 enthält als ein Grundmaterial Siliziumpulver ("silicon powder") bzw. -partikel, jedoch kein Füllmaterial ("filler material"). Das Silizium, in der Zeichnung entsprechend der chemischen Abkürzung mit Si bezeichnet, diffundiert in das benachbarte aufplattierte Aluminium 69 und erzeugt dabei Schichten 71 aus Aluminium mit niedrigen Schmelzpunkten, die sich miteinander verbinden und eine Verbindung herstellen. Der Zusatz von Füllmaterial während des Lötens kann damit entfallen.

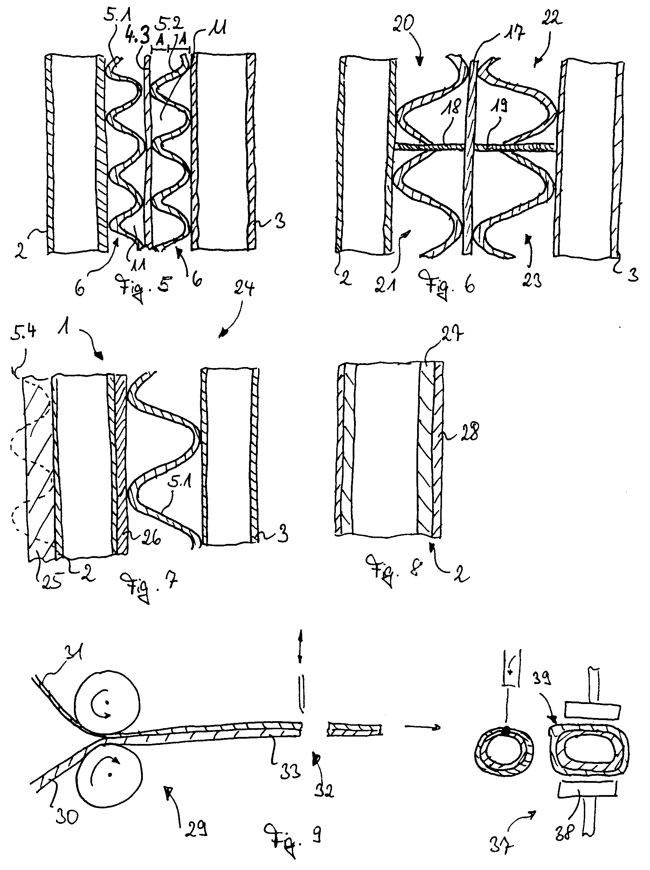

Fig. 5 zeigt das erste Rohr 2 sowie das zweite Rohr 3 entsprechend dem Wärmetauscher aus Fig. 1. Zwischen ihnen ist eine erste Finne 5.1 und eine zweite Finne 5.2 angeordnet. Die beiden Finnen 5.1, 5.2 sind zu jeweils einer Seite mit ihrer Struktur 6 am Rohr 2 bzw. 3 befestigt. Mit ihrer anderen Seite sind sie an einem Blech als wärmeleitendes Bauteil 4.3 befestigt. Das Blech bildet wiederum Kanäle 11 mit den beiden Finnen 5.1, 5.2 aus. Weiterhin ermöglicht das Blech, daß eine Amplitude A der wellenförmigen Struktur 6 bei einer Drucklötung größer gewählt werden kann als ohne, so daß die Materialdicke der Finnen 5.1, 5.2 nicht zusätzlich verstärkt werden muß, um die Stabilität während des Lötprozesses zu wahren. Dabei können die Finnen 5.1, 5.2 so stark aufgeheizt werden, däß zwar eine Liquidustemperatur des verwendeten Materials der Finnen 5.1, 5.2 noch nicht erreicht, aber trotzdem das Material schon nahe davor ist, teigig zu werden und an Festigkeit zu verlieren droht. Das Blech hilft, die Stabilität während des Lötens zu behalten, wodurch gleichmäßige Lötverbindungen unter Ausnutzung der hohen Temperatur herstellbar sind. Diese Gleichmäßigkeit sorgt später auch für einen gleichmäßigen Wärmestrom über diese Lötverbindungen.

Fig. 6 zeigt in einem Ausschnitt aus einem weiteren Wärmetauscher zwischen dem ersten Rohr 2 und zweiten Rohr 3 ein erstes Blech 17, das parallel zu beiden Rohren 2, 3 verläuft sowie ein zweites 18 und drittes 19 Blech, die senkrecht zu dem ersten Blech 17 angeordnet sind. Das erste Blech 17 wie auch das zweite 18 bzw. dritte 19 Blech sind in der Lage, den Wärmetauscher zu versteifen. Durch die zwischen den beiden Rohren 2, 3 entstandene Aufteilung ist die Möglichkeit geschaffen, ein erstes 20, zweites 21, drittes 22, viertes 23 Finnenpaket zwischen beiden Rohren 2, 3 anzuordnen. Diese sind untereinander getrennt. Durch Vorfertigung der Finnenpakete 20, 21, 22, 23 ist ein modularer Aufbau eines Wärmetauschers sichergestellt, wobei jedes Modul speziell an den lokal zu übertragenden Wärmestrom angepaßt werden kann.

Fig. 7 zeigt ein Ende 24 des Wärmetauschers 1 aus Fig. 1. Das erste Rohr 2 ist an einer Seite an einer Halterung 25 befestigt. An der anderen Seite findet sich ein weiteres wärmeleitendes Bauteil 26. Das Bauteil 26 überträgt den Druck, der zwischen dem ersten Rohr 2 und dem zweiten Rohr 3 mittels der dazwischen angeordneten Finnen 5.1 übertragen wird. Lokale Spanpungsspitzen aufgrund Druckübertragung werden so am ersten Rohr 2 vermieden. Anstatt der Halterung 25 können sich an dieser Seite auch weitere Finnen 5.4 befinden, so wie sie gestrichelt angedeutet sind. Dieses hat den Vorteil, daß die gesamte Oberfläche des ersten Rohres 2 zur Wärmeabgabe genutzt wird. Das erste Rohr 2 wird dann mittels beispielsweise einer nicht näher dargestellten Verstrebung gehalten. Das wärmeleitende Bauteil 26 hat vorzugsweise eine Materialdicke entsprechend zu derjenigen der Finnen 5.1. Diese kann jedoch zum Beispiel aus Stabilitätsgründen erheblich davon abweichen und größer sein.

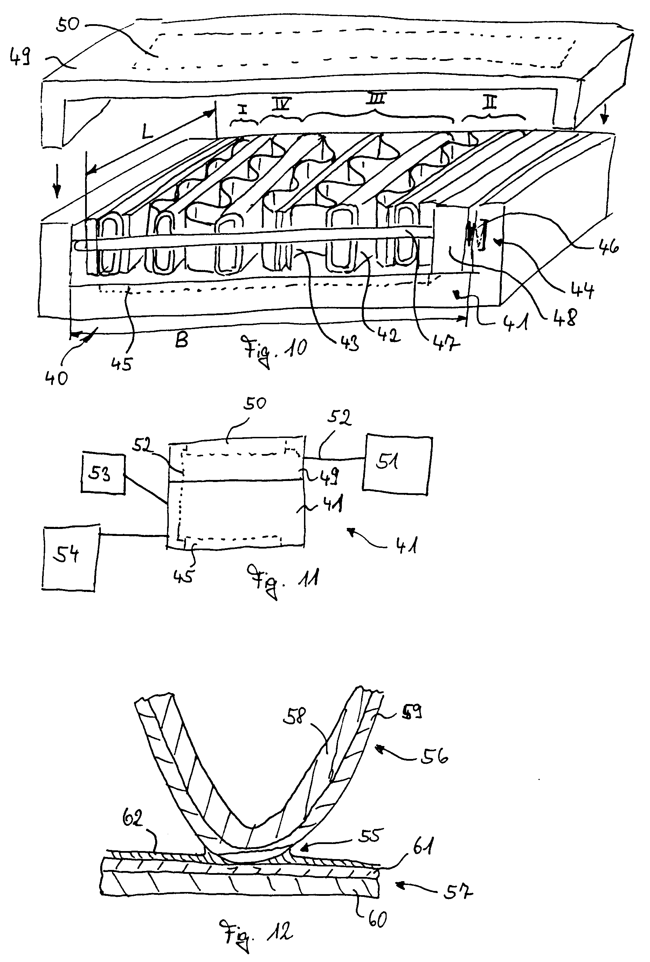

Fig. 8 zeigt ein erstes Rohr 2, daß im Inneren Stahl 27 und außen Aluminium 28 hat. Das Aluminium 28 ist auf den Stahl 27 aufplattiert. Dieser Aufabu des Rohres 2 wird bevorzugt für einen Wärmetauscher für Großapparate eingesetzt, da dieses eine gute Wärmeübertragung bei gleichzeitig guter Anbindung an andere Bauteile zur Verfügung stellt.

Fig. 9 zeigt schematich ein Herstellungsverfahren für ein abgeflachtes Rohr, wonach beispielsweise auch ein Rohr nach Fig. 8 hergestellt werden kann. In einer ersten Station 29 werden ein Stahlblech 30 und ein Aluminiumblech 31 miteinander verwalzt. In einer zweiten Station 32 wird das so plattierte Material 33 zu passender Länge geschnitten. In einer dritten Station 34 wird das geschnittene Material 35 zu einem Rohr 36 geformt und laserverschweist. In einer vierten Station 37 erfolgt über ein Stempelsystem 38 die Ausbildung des abgeflachten Querschnittes 39.

Fig. 10 zeigt eine Ausgestaltung einer Vorrichtung 40 zur Fertigung eines Wärmetauschers. In einer Aufnahme 41 mit einer Breite B sind eine Anzahl von miteinander zu verbindenden abgeflachten Rohren 42 und daran zu befestigenden Finnen 43 andgeordnet. Die Vorrichtung 40 weist dazu eine Verspannvorrichtung 44 auf. Die Aufnahme 41 ist so gestaltet, daß die Rohre 42 und Finnen 43 in einer bestimmten Reihenfolge einzusetzen sind. Die Breite B der Aufnahme 41 beträgt zwischen einem und drei Meter. Für Sonderproduktionen kann die Breite B aber auch davon insbesondere nach oben abweichen. Eine Länge L der Aufnahme 41 nimmt ein Maß von einem Meter, insbesondere von drei und mehr Metern und vorzugsweise von um die zehn Meter an. Es ist vorteilhaft, daß zum einen der Druck, welcher durch die Verspannvorrichtung 44 aufgebracht wird, gleichmäßig über die Rohre 42 und Finnen 43 verteilt wird und zum anderen zusätzliche Anbauten wie eine Heizeinrichtung 45 so angeordnet sind, daß sie entsprechend der bestimmten Reihenfolge der Rohre 42 und Finnen 43 ausgerichtet sind, um den Verbindungsvorgang in der Vorrichtung 14 vorteilhaft zu unterstützen. Als zweckmäßig für die Verspannvorrichtung 44 hat sich ein Federsystem 46 erwiesen. Dieses wird durch zwei Führungsstangen 47 unterstützt. Entlang dieser Führungsstange 47 wird durch das Federsystem 46 ein verfahrbarer Backen 48 zur Druckaufbringung auf die Rohre 42 und 43 bewegt. Zur Druckerzeugung sind aber ebenfalls geeignete hydraulische oder elektrische Verfahreinrichtungen anwendbar.

In Fig. 10 ist weiterhin eine Abdeckung 49 dargestellt. Diese dient zum Zurückhalten und zur Aufrechterhaltung einer vorgebaren Gasatmosphäre in der Aufnahme 41. Weiterhin weist die Abdeckung 49 eine zweite Wärmequelle 50 auf. Die erste 45 und zweite 50 Wärmequelle übertragen vorteilhafterweise ihre Energie mittels Strahlung, insbesondere gerichtet, so däß Berührungslinien zwischen den zu verbindenden Rohren 42 und Finnen 43, ausreichend erwärmt werden.

Auch zeigt Fig. 10, wie ein Wärmetauscher aus unterschiedlichen Abschnitten aufgebaut sein kann. Während die Endabschnitte I, II ein Rohr mit an jeder Seite einem Blech sowie an einer Seite Finnen aufweist, hat die erste Mittellage III zwei Rohre mit dazwischenliegenden Finnen und die zweite Mittellage IV ein Rohr mit Finnen, wobei zwischen den Finnen ein wärmeleitendes Bauteil in Form eines weiteren Bleches angeordnet ist. Dieser modulare Aufbau ermöglicht, die Fertigung unter wärmetechnischen Gesichtspunkten des späteren Wärmetauschers wie auch unter Stabilitätskriterien auszulegen.

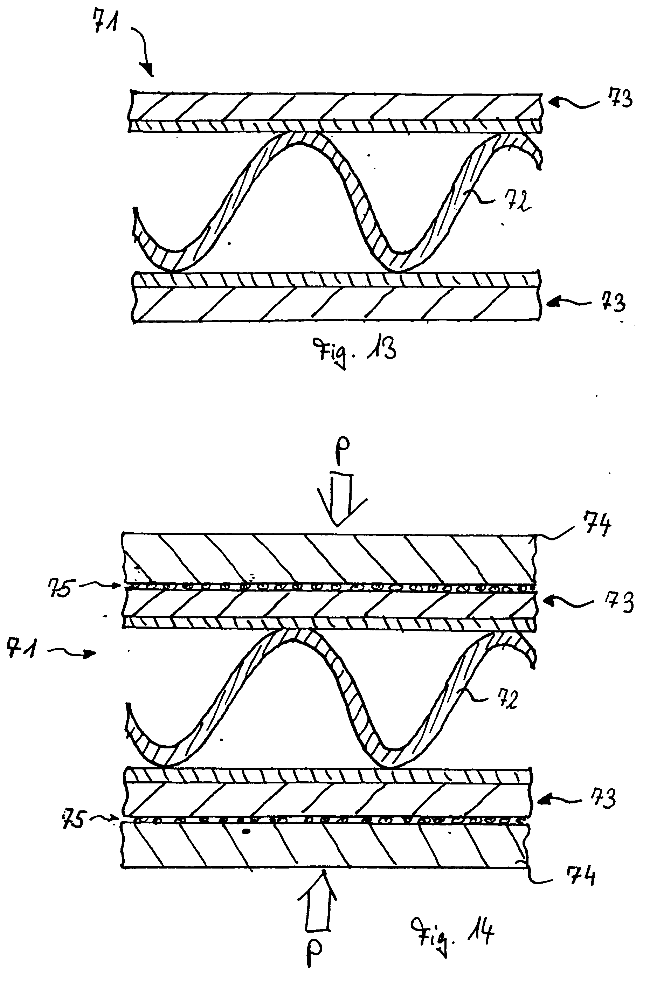

Fig. 11 zeigt eine schematische Ausgestaltung der Vorrichtung 40. An die Aufnahme 41 ist eine Heizeinrichtung 51 angeschlossen. Diese versorgt die erste 45 und zweite 50 Wärmequelle mit Energie, wobei diese über geeignete Leitungen 52 geleitet werden. An die Aufnahme 41 ist weiterhin eine Einrichtung 53 zur Erzeugung und/oder zur Aufrechterhaltung einer vorgebbaren Gasatmosphäre sowie eine Druckvorrichtung 54 angeschlossen, mit der in den Rohren ein Innendruck erzeugt wird.

Fig. 12 zeigt nochmals einen Ausschnitt aus einer in der Vorrichtung hergestellten Verbindung 55 zwischen einer Finne 56 und einem Rohr 57. Die Finne 56 weist als Grundmaterial 58 Aluminium auf, auf welches eine aluminiumhaltige Schicht 59 aufplattiert ist. Das Rohr 57 hat im Inneren Stahl 60, auf den eine Lage 61 Aluminium aufplattiert ist. Auf dieser Lage 61 befindet sich wiederum eine Beschichtung 62, die aluminiumhaltig ist. Diese Beschichtung 62 ist auf die Lage 61 aufgestrichen oder aufgesprüht. Sie dient mit zur Herstellung der Verbindung 55. Dazu weist die Beschichtung 62 die Verbindung 55 unterstützende weitere Materialien auf.

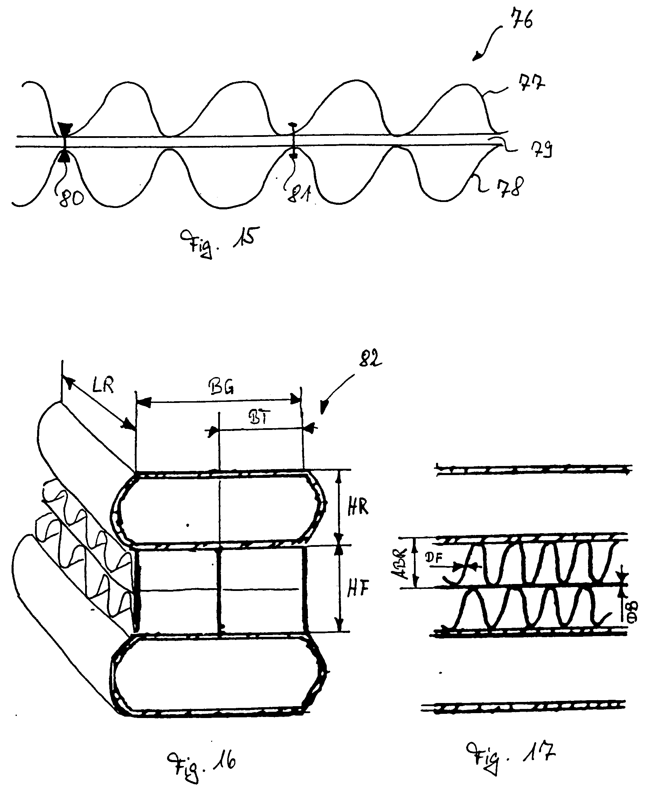

Fig. 13 und Fig. 14 zeigen ein besonders bevorzugtes Verfahren zur Fertigung eines Wärmetauschers in zwei Schritten. Fig. 13 zeigt den schon ausgeführten ersten Schritt, Fig. 14 die Ausführung des zweiten Schriites der Fertigung. Dazu jeweils nun im Einzelnen.

Fig. 13 zeigt einen "cake" 71, der aufgebaut ist aus strukturierten Finnen 72 aus vorzugsweise reinem Aluminium und an jeder Seite davon einem Lotblech 73. Das Lotblech 73 hat einen Schichtaufbau, wie er beispielsweise schon in der oben erwähnten Quelle "Aluminum Brazing Handbook" erwähnt wurde. Dieser "cake" wird unter einem Vakuum hartgelötet bei etwa 600°C. Dieses ist auch in etwa diejenige Temperatur, bei der das Aluminium anfängt, teigig zu werden. Durch die Verbindung der Finnen 72 mit den Lotblechen 73 gelingt es jedoch, die Struktur der Finnen 72 bei diesem eingesetzten Verbindungsverfahren zu wahren. Bevorzugt wird als Lotblech 73 eines mit einem Material 3003/4004 aufgebautes Lotblech entsprechend obiger Quelle, page 31, table 3-3B, oder Vergleichbares gewählt.

Fig. 14 zeigt einen nach dem Hartlöten entsprechend Fig. 13 folgenden weiteren zweiten Schritt. Der "cake" 71 mit seinen beiden Lotblechen 73 und den Finnen 72 wird in einem zweiten Verbindungsverfahren mit jeweils einem Stahlrohr 74 an jeder Seite unter einer wesentlich niedrigeren Temperatur als beim Hartlöten miteinander verbunden. Dieses kann im Falle des Weichlötens eine Temperatur um die 250°C sein. Auch bei einer Klebung kann je nach verwendetem Kleber es hilfreich sein, eine entsprechend hohe Temperatur zum Aushärten zu wählen. Auf den "cake" 71 wird zur Verbindung auf jede Seite das Verbindungsmittel 75, Lot oder Kleber, aufgetragen, das gegebenfalls sich auch mittels Kapillareffekte auf der jeweiligen Fläche ausbreiten kann. Das Verbindungsverfahren wird durch Aufbringen von Druck auf beide Stahlrohre 74 unterstützt, wodurch eine gleichmäßig ausgebildete Verbindung erzielt wird. Bevorzugt wird im zweiten Schritt das Verbindungsmittel 75 aufgetragen, anschließend die Stahlrohre 74 mit dem "cake" 71 unter Druck gesetzt, dann die Temperatur erhöht und anschließend wieder abgekühlt.

Fig. 15 zeigt einen zweiten "cake" 76 als quasi "double-cake" in Anlehnung an den ersten "cake " 71 aus Fig. 14. Die oberen Finnen 77 und die unteren Finnen 78 werden zuerst auf eine Länge zwischen beispielsweise einem und zehn Metern geschnitten. In einem nächsten Schnitt werden die Finnen 77, 78 mit einem Mittelblech 79 verbunden und zwar vorzugsweise temporär. Darunter ist zu verstehen, daß die Finnen 77, 78 zwar bezüglich ihrer Lage an dem Mittelblech 79 positioniert und fixiert sind, so daß der entstandene "cake" 76 beispielsweise umgelagert oder damit sonstwie verfahren werden kann. Die Verbindung ist jedoch andererseits nicht wieder so stark ausgeprägt, als das sie nicht wieder gelöst oder durch eine entsprechendes Verbindungsverfahren völlig überflüssig gemacht werden könnte. Die Verbindung kann beispielsweise mittels Verschraubung 80, Klemmvorrichtung 81, Falzung oder anderer geeigneter Mittel aus der Verbindungstechnik erfolgen.

Fig. 16 zeigt einen Ausschnitt aus einem Wärmetauscher 82 mit einem Aufbau, aus dem bevorzugte Maße der Dimensionierung für einen Kraftwerksprozeß hervorgehen. Die Länge LR des Rohres kann zehn Meter und mehr erreichen. Dieses ist abhängig von dem abzuführenden Wärmestrom. Die Breite BG des gesamten Rohres ohne Berücksichtigung einer Auswölbung beträgt zwischen 400 mm und 150 mm, vorzugsweise 250 mm. Dieses liefert dem System eine ausreichende Stabilität und das zu kühlende Medium im Rohr erhält eine genügend große Kühlfläche. Die Teilbreite des Rohres BT beträgt etwa die Hälfte von BG, kann aber auch ein Viertel oder ein Drittel davon betragen. BG gibt an, wo die Finnen ebenfalls noch unterteilt sein können. Die Höhe des Rohres HR liegt zwischen 35 mm und 15 mm, insbesondere etwa 25 mm. Die Höhe HF der Finnen zwischen zwei Rohren beträgt zwischen 60 mm und 30 mm, vorzugsweise etwa 40 mm, kann jedoch bei entsprechender Gestaltung des Aufbaus von Finnen und wärmeleitenden Bauteilen davon abweichen. Auch sind die Bemaßungen von den einzustellenden Strömungs- und zu übertragenden Wärmeströmen abhängig.

Die Fig. 17 zeigt einen weiteren Ausschnitt aus dem Wärmetauscher 82, wobei noch weitere Dimensionierungen dargestellt sind. Bei Verwendung eines wärmeleitenden Bauteiles zwischen zwei Finnen wird vorzugsweise ein Abstand ABR zwischen Rohr und wärmeleitendem Bauteil zwischen 30 und 15 mm, insbesondere 20 mm, verwendet. Ein derartiger Abstand hat sich bei Luftkühlung und entsprechender Strömungsgeschwindigkeit der Luft in den Kanälen als zweckmäßig erwiesen. Die Finnen haben eine Materialdicke DF von vorzugsweise zwischen 0,45 mm und 0,25 mm, insbesondere 0,3 mm, und das wärmeleitende Bauteil weist eine Materialdicke DB von vorzugsweise zwischen 0,45 mm und 0,25 mm, insbesondere 0,3 mm. Bei diesen Maßen lassen sich die verwendeten Materialien gut verformen, ohne daß Einbußen in der Stabilität damit einhergehen. Ein weiterer Vorteil ergibt sich, sofern das gleiche Material für die Finnen wie auch für das wärmeleitende Bauteil verwendet wird. Das Material wird kostengünstiger und bei der Herstellung können Parameter zur Verbindung eingestellt werden, die nur dieses Material berücksichtigen müssen.

Die vorliegende Erfindung schafft Wärmetauscher, Verfahren zur Herstellung eines Wärmetauschers sowie eine Vorrichtung zur Fertigung eines Wärmetauschers, welche besonders vorteilhaft für luftgekühlte Kondensatoren in Kraftwerksprozessen einsetzbar sind.

### Bezugszeichenliste

- 1: Wärmetauscher
- 2: erstes metallenes Rohr
- 3: zweites Rohr
- 4.1, 4.2, 4.3: wärmeleitendes Bauteil
- 5.1, 5.2, 5.3, 5.4: Finnen
- 6: Struktur
- 7: erste Seite der Struktur
- 8: Berührung
- 9: abgeflachter Bereich
- 10: zweite Seite der Struktur
- 11: Kanal
- 12: zweites Fluid
- 13: erstes Fluid
- 14: Einlaß
- 15: Auslaß
- 16: Lot
- 17: erstes Blech
- 18: zweites Blech
- 19: drittes Blech
- 20: erstes Finnenpaket
- 21: zweites Finnenpaket
- 22: drittes Finnenpaket
- 23: viertes Finnenpaket
- 24: Ende
- 25: Halterung
- 26: Endblech
- 27: Stahl
- 28: Aluminium
- 29: erste Station
- 30: Stahlblech
- 31: Aluminiumblech
- 32: zweite Station
- 33: plattiertes Material
- 34: dritte Station
- 35: geschnittenes Material
- 36: Rohr
- 37: vierte Station
- 38: Stempelsystem
- 39: abgeflachter Querschnitt
- 40: Vorrichtung
- 41: Aufnahme
- 42: Rohr
- 43: Finnen
- 44: Verspannvorrichtung
- 45: erste Wärmequelle
- 46: Federsystem
- 47: Führungsstange
- 48: Verfahrbacken
- 49: Abdeckung
- 50: zweite Wärmequelle
- 51: Heizeinrichtung
- 52: Leitung
- 53: Einrichtung zur Erzeugung...
- 54: Druckvorrichtung
- 55: Verbindung
- 56: Finne
- 57: Rohr
- 58: Grundmaterial
- 59: aufplattierte Aluminiumschicht
- 60: Stahl
- 61: Aluminiumlage
- 62: Beschichtung
- 63: Stahlrohr
- 64: Aluminiumlage
- 65: Finnen
- 66: Lotblech ("brazing sheet")
- 67: Finnen
- 68: Stahlrohr
- 69: reines Aluminium
- 70: Flußmittel
- 71: "cake"
- 72: Finnen
- 73: Lotblech
- 74: Stahlrohr
- 75: Verbindungsmittel
- 76: zweiter "cake"
- 77: obere Finnen
- 78: untere Finnen
- 79: Mittelblech
- 80: Verschraubung
- 81: Klemmvorrichtung
- 82: Wärmetauscher
- I, II: Endabschnitt
- III: erste Mittellage
- IV: zweite Mittellage
- ABR: Abstand zwischen Bauteil und Rohr
- B: Breite der Aufnahme
- BG: Gesamtbreite des Rohres
- BT: Teilbreite des Rohres
- DB: Materialdicke des Bauteiles
- DF: Materialdicke der Finnen
- HF: Höhe der Finnen
- HR: Höhe des Rohres
- L: Länge der Aufnahme
- LR: Länge des Rohres

## Patentansprüche

1. Wärmetauscher (1; 82) für ein direktes Kühlungsverfahren in einem Großprozeß, insbesondere in einem Kraftwerksprozeß,
- mit einem ersten (2) und einem zweiten (3) metallenen Rohr mit jeweils abgeflachtem Querschnitt,
- mit einer Vielzahl von metallenen ersten Finnen (5.1), die außen zumindest im abgeflachten Bereich (9) an dem ersten Rohr (2) befestigt sind,
- mit einem Einlaß (14) und einem Auslaß (15) jeweils am ersten (2) und am zweiten (3) Rohr für ein durchströmendes erstes Fluid (13),
- mit einer Anordnung der Finnen (5.1, 5.3) auf dem Rohr zur Anströmung durch ein zweites Fluid (12), wobei die Finnen eine zick-zack-ähnliche, wellenähnliche oder V-ähnliche Struktur (6) aufweisen und mit einer ersten Seite (7) der Struktur (6) entlang ihrer Berührung zum ersten Rohr (2) befestigt sind,
dadurch gekennzeichnet, daß
zwischen dem ersten Rohr (2) und den ersten Finnen (5.1) ein erstes wärmeleitendes Bauteil (26; 73) angeordnet ist.

2. Wärmetauscher (1; 82) nach Anspruch 1, dadurch gekennzeichnet, daß ein erstes Ende (24) des Wärmetauschers (1; 82) einen folgenden Aufbau hat:
- erstes Rohr (2; 74),
- wärmeleitendes Bauteil (26; 73) und
- erste Finnen (5.1).

3. Wärmetauscher (1; 82) nach Anspruch 1 oder 2, dadurch gekennzeichnet, daß das erste Rohr (2; 74) und das wärmeleitende Bauteil (26; 73) miteinander weichgelötet sind.

4. Wärmetauscher (1; 82) nach einem der Ansprüche 1 oder 2, dadurch gekennzeichnet, daß das erste Rohr (2; 74) und das wärmeleitende Bauteil (26; 73) miteinander verklebt sind.

5. Wärmetauscher (1; 82) nach einem der Ansprüche 1 bis 4, dadurch gekennzeichnet, daß das wärmeleitende Bauteil (73) und die Finnen (72) miteinander hartgelötet sind.

6. Wärmetauscher (1; 82) für ein direktes Kühlungsverfahren in einem Großprozeß, insbesondere in einem Kraftwerksprozeß,
- mit einem ersten (2) und einem zweiten (3) metallenen Rohr mit jeweils abgeflachtem Querschnitt,
- mit einer Vielzähl von metallenen ersten Finnen (5.1), die außen zumindest im abgeflachten Bereich (9) an dem ersten Rohr (2) befestigt sind,
- mit einer Vielzahl von metallenen zweiten Finnen (5.2), die außen zumindest im abgeflachten Bereich an dem zweiten Rohr (3) befestigt sind,
- mit einem Einlaß (14) und einem Auslaß (15) jeweils am ersten (2) und am zweiten (3) Rohr für ein durchströmendes erstes Fluid (13),
- mit einer Anordnung der Finnen auf dem Rohr zur Anströmung durch ein zweites Fluid (12), wobei die Finnen eine zick-zack-ähnliche, wellenähnliche oder V-ähnliche Struktur (6) aufweisen und mit einer ersten Seite (7) der Struktur (6) entlang ihrer Berührung zum Rohr befestigt sind,
dadurch gekennzeichnet, daß zwischen den ersten (5.1) und den zweiten (5.2) Finnen ein erstes wärmeleitendes Bauteil (4.1) angeordnet ist, an dem jeweils eine zweite Seite (10) der Struktur (6) der Finnen befestigt ist, wobei das Bauteil (4.1) zumindest einen Vollquerschnitt hat.

7. Wärmetauscher (1; 82) nach einem der Ansprüchs 1 bis 6, dadurch gekennzeichnet, daß das wärmeleitende Bauteil (4.1) zumindest teilweise Vollmaterial ist.

8. Wärmetauscher (1; 82) nach einem der Ansprüche 1 bis 7, dadurch gekennzeichnet, daß das wärmeleitende Bauteil (4.1; 16) und/oder die Finnen (5.1, 5.2, 5.3) ein Blech ist, das insbesondere Aluminium aufweist.

9. Wärmetauscher (1; 82) nach einem der Ansprüche 1 bis 8, dadurch gekennzeichnet, daß das wärmeleitende Bauteil (4.1) Spannungen zwischen dem ersten (2) und dem zweiten Rohr (3) durch Verformung ausgleicht.

10. Wärmetauscher (1; 82) nach einem der Ansprüche 1 bis 9, dadurch gekennzeichnet, daß ein zweites zusätzliches wärmeleitendes Bauteil (18, 19) in Kontakt mit dem ersten (2) und dem zweiten (3) Rohr ist.

11. Wärmetauscher (1; 82) nach Anspruch 10, dadurch gekennzeichnet, daß das zweite wärmeleitende Bauteil (18, 19) eine Versteifung ist.

12. Wärmetauscher (1; 82) nach einem der vorherigen Ansprüche, dadurch gekennzeichnet, daß dieser aus mehreren Lagen aufgebaut ist, wobei eine Lage ein Rohr, erste und zweite Finnen und ein wärmeleitendes Bauteil hat.

13. Wärmetauscher (1; 82) nach einem der vorherigen Ansprüche, dadurch gekennzeichnet, daß das erste Rohr (2) für einen Überdruck von mindestens zwei bar ausgelegt ist.

14. Wärmetauscher (1; 82) nach einem der vorherigen Ansprüche, dadurch gekennzeichnet, daß dieser an einen Kreislauf für das erste Fluid (13) angeschlossen ist.

15. Wärmetauscher (1; 82) nach einem der vorherigen Ansprüche, dadurch gekennzeichnet, daß das erste Rohr (2) aus Metall (27) ist und aufplattiertes Aluminium (28) aufweist.

16. Wärmetauscher (1; 82) nach einem der vorherigen Ansprüche, dadurch gekennzeichnet, daß sich auf dem aufplattierten Aluminium (61) eine weitere aluminiumhaltige Schicht (62) befindet.

17. Wärmetauscher (1; 82) nach Anspruch 16, dadurch gekennzeichnet, daß die aluminiumhaltige Schicht (62) einen geringeren Aluminiumgehalt aufweist als das aufplattierte Aluminium (61).

18. Wärmetauscher (1; 82) nach Anspruch 15 bis 17, dadurch gekennzeichnet, däß das erste Rohr (2) aus Stahl ist.

19. Wärmetauscher (1; 82) nach einem der Ansprüche 15 oder 18, dadurch gekennzeichnet, daß auf dem Rohr Finnen aus Aluminium befestigt sind, die einen Aluminiumanteil von über 90 %, insbesondere etwa 99.5% haben, wobei das aufplattierte Aluminium einen niedrigeren Schmelzpunkt aufweist als das Aluminum der Finnen.

20. Wärmetauscher (1; 82) nach einem der vorhergehenden Ansprüche, dadurch gekennzeichnet, daß dieser zwischen mindestens ersten und zweiten Finnen ein Lotblech ("brazing sheet") und zwischen dem ersten Rohr und den ersten Finnen eine aluminiumhaltige Platte hat.

21. Vorrichtung (40) zur Fertigung eines Wärmetauschers (1; 82) für den Großapparatebau, mit einer Aufnahme (41) mit einer Länge (L) von mindestens einem Meter, insbesondere über fünf Meter, vorzugsweise von um die zehn Meter, für eine Anzahl von miteinander zu verbindenden abgeflachten Rohren (42) und Finnen (43), wobei die Vorrichtung eine Verspanneinrichtung (44) hat, mit der die Rohre (42) und die Finnen (43) untereinander in der Aufnahme (41) unter Druck zu setzen sind.

22. Vorrichtung (40) nach Anspruch 21, dadurch gekennzeichnet, daß die Aufnahme (41) so gestaltet ist, daß mehrere Rohre und Finnen in bestimmter Reihenfolge in regelmäßig sich wiederholenden Intervallen einzusetzen sind.

23. Vorrichtung (40) nach Anspruch 21 oder 22, dadurch gekennzeichnet, daß ein wärmeleitendes Bauteil nach einem der Ansprüche 1 bis 20 zwischen einem Rohr und Finnen, zwischen Finnen oder zwischen einem Rohr und Finnen und zwischen Finnen einzusetzen ist.

24. Vorrichtung (40) nach einem der Ansprüche 21 bis 23, dadurch gekennzeichnet, däß die Verspanneinrichtung (44) ein Federsystem (46) zur Druckerzeugung aufweist.

25. Vorrichtung (40) nach einem der Ansprüche 21 bis 24, dadurch gekennzeichnet, däß die Verspanneinrichtung (46) zwei Führungsstangen (47) hat, zwischen denen die Rohre (42) und Finnen (43) angeordnet werden, sowie einen entlang der Führungsstangen verfahrbaren Backen (48) zur Druckaufbringung.

26. Vorrichtung (40) nach einem der Ansprüche 21 bis 25, dadurch gekennzeichnet, daß diese eine Heizeinrichtung (51) zur Aufheizung von Rohren und Finnen in der Aufnahme (41) hat.

27. Vorrichtung (40) nach Anspruch 26, dadurch gekennzeichnet, daß die Heizeihrichtung (51) ihre Energie auf eine Oberseite der Aufnahme (41) richtet und auf eine der Oberseite gegenüberliegenden Unterseite der Aufnahme (41).

28. Vorrichtung (40) nach Anspruch 27, dadurch gekennzeichnet, daß die Heizeinrichtung (51) eine erste (45) und eine zweite (50) Wärmequelle aufweist.

29. Vorrichtung (40) nach einem der Ansprüche 26 bis 28, dadurch gekennzeichnet, daß die Heizeinrichtung (51) in der Lage ist, Temperaturen zum Weich- und/oder Hartlöten zur Verfügung zu stellen.

30. Vorrichtung (40) nach einem der Ansprüche 21 bis 29, dadurch gekennzeichnet, daß diese eine Abdeckung (49) für die Aufnahme (41) aufweist, die eine Aufrechterhaltung einer vorgebbaren Gasatmosphäre in der Aufnahme (41) zuläßt.

31. Vorrichtung (40) nach einem der Ansprüche 21 bis 30, dadurch gekennzeichnet, daß diese eine Einrichtung (53) zur Erzeugung und/oder zur Aufrechterhaltung einer vorgebbaren Gasatmosphäre in der Aufnahme (41) hat.

32. Vorrichtung (40) nach einem der Ansprüche 21 bis 31, dadurch gekennzeichnet, daß diese eine Druckvorrichtung (54) hat, mit der in den Rohren ein Innendruck erzeugt wird.

33. Verfahren zur Herstellung eines Wärmetauschers (1; 82), der metallene, abgeflachte Rohre und daran befestigte Finnen aufweist, mit den folgenden Schritten:
- Nebeneinanderreihen der Rohre (42) und der Finnen (43) zu einem losen Stapel, wobei die Finnen (43) zu zwei Seiten kontaktiert werden,
- Aufbringen von Druck auf den losen Stapel, so daß Berührungsflächen von Rohren (42) und Finnen (43) des losen Stapels unter Druck stehen und
- Verbinden der Berührungsflächen von Rohren (42) und Finnen (43) des losen Stapels zu einem festen Verbund während der Aufbringung des Druckes, so daß der feste Verbund später in einem Wärmetauscher (1; 82) eingesetzt werden kann.

34. Verfahren nach Anspruch 33, dadurch gekennzeichnet, daß vor dem Nebeneinanderreihen erste und zweite Finnen (77) an einem wärmeleitenden Bauteil (79) befestigt werden, wobei das wärmeleitende Bauteil (79) insbesondere zwischen den ersten und den zweiten Finnen (77) angeordnet wird.

35. Verfahren nach Anspruch 33 oder 34, dadurch gekennzeichnet, daß der Druck durch eine Vorrichtung (40) nach einem der Ansprüche 21 bis 32 erzeugt wird.

36. Verfahren nach Anspruch 33, 34 oder 35, dadurch gekennzeichnet, daß in den Rohren ein Innendruck herrscht, der größer als die die Rohre umgebende Atmosphäre ist, wenn der feste Verbund hergestellt wird.

37. Verfahren nach einem der Ansprüche 33 bis 36, dadurch gekennzeichnet, daß ein Wärmetauscher (1; 82) nach den Ansprüchen 1 bis 20 hergestellt wird.

38. Verfahren nach einem der Ansprüche 33 bis 37, dadurch gekennzeichnet, daß der feste Verbund mittels Löten unter einer Schutzgasatmosphäre entsteht.

39. Verfahren zur Herstellung eines Wärmetauschers (1; 82) mit einem ersten und einem zweiten Schritt zur Verbindung von Teilen des Wärmetauschers (1;82), wobei
- im ersten Schritt erste Teile (72, 73) miteinander in einem ersten Verbindungsverfahren verbunden werden, bei dem eine erste Temperatur während des Verbindungsverfahrens eingesetzt wird, und
- im zweiten Schritt die ersten miteinander verbundenen Teile (72, 73) mit mindestens einem zweiten Teil (74) mittels eines zweiten Verbindungsverfahren verbunden werden, wobei während des zweiten Verbindungsverfahrens eine zweite Temperatur eingesetzt wird, die kleiner als die erste Temperatur ist.

40. Verfahren nach Anspruch 39, dadurch gekennzeichnet, daß die erste Temperatur nahe zu einer Schmelzpunkttemperatur eines Materials der ersten Teile gebracht wird.

41. Verfahren nach einem der Ansprüche 39 oder 40, dadurch gekennzeichnet, daß im ersten Schritt hartgelötet wird.

42. Verfahren nach einem der Ansprüche 39 bis 41, dadurch gekennzeichnet, daß im zweiten Schritt weichgelötet wird.

43. Verfahren nach einem der Ansprüche 39 bis 41, dadurch gekennzeichnet, daß im zweiten Schritt geklebt wird.

44. Verfahren nach einem der Ansprüche 39 bis 43, dadurch gekennzeichnet, daß im zweiten Schritt Druck auf die zu verbindenden Teile mittels einer Vorrichtung (40) aufgebracht wird.

45. Verfahren nach einem der Ansprüche 39 bis 44, dadurch gekennzeichnet, daß im ersten Schritt Finnen verbunden werden, die eine Struktur mit einer ersten und einer zweiten Seite haben, wobei jede Seite jeweils mit einem Teil verbunden wird.

46. Verfahren nach Anspruch 45, dadurch gekennzeichnet, daß Finnen aus Aluminium und Lotblech ("brazing sheets") als Teile verwendet werden.

47. Verfahren nach einem der Ansprüche 39 bis 47, dadurch gekennzeichnet, daß im ersten Schritt erste und zweite Finnen verwendet werden, zwischen denen ein wärmeleitendes Bauteil angeordnet wird, insbesondere ein Lotblech ("brazing sheet"), über das die Finnen miteinander verbunden werden.

48. Verfahren nach Anspruch 47, dadurch gekennzeichnet, daß im zweiten Schritt die ersten Teile mit einem Stahlrohr verbunden werden.

49. Verfahren nach einem der Ansprüche 39 bis 48, dadurch gekennzeichnet, daß ein Wärmetauscher (1; 82) nach einem der Ansprüche 1 bis 20 hergestellt wird.

50. Verfahren zur Herstellung eines Wärmetauschers (1;82) für den Großapparatebau insbesondere nach einem der vorhergehenden Ansprüche,
- mit einem ersten metallenen Rohr (2) mit abgeflachtem Querschnitt,
- mit metallenen ersten Finnen (5.1) auf einer äußeren Oberfläche des ersten Rohres (2), wobei die ersten Finnen dort befestigt sind,
- mit einem Einlaß (14) und einem Auslaß (15) für ein erstes Fluid (13),
- mit einer Anordnung der ersten Finnen (5.1) auf dem Rohr (2) zur Anströmung durch ein zweites Fluid (12),
dadurch gekennzeichnet,
daß als erstes Rohr (2) ein metallenes Rohr verwendet wird, das mit Aluminium (28) plattiert ist.

51. Verfahren nach Anspruch 50, dadurch gekennzeichnet, daß ein mit Aluminium plattiertes Blech (33) zum ersten Rohr (33) geformt wird.

52. Verfahren nach Anspruch 50 oder 51, dadurch gekennzeichnet, daß ein Stahlblech (30) mit einer Dicke zwischen etwa 2,5 und 1 mm, insbesondere 1,5 mm, mit Aluminium, vorzugsweise mit mindestens 90%, insbesondere 99% Aluminiumanteil, plattiert und zum ersten Rohr gefertigt wird.

53. Verfahren nach Anspruch 52, dadurch gekennzeichnet, daß etwa eine Dicke zwischen 20 und 100 Mikrometer, insbesondere 50 Mikrometer Aluminium aufplattiert wird.

54. Verfahren nach einem der Ansprüche 50 bis 53, dadurch gekennzeichnet, daß auf das aufplattierte Aluminium (61) eine aluminiumhaltige Schicht (62) aufgebracht wird.

55. Verfahren nach Anspruch 54, dadurch gekennzeichnet, daß eine aluminiumhaltige Schicht verwendet wird, die einen geringeren Aluminiumgehalt aufweist als das aufplattierte Aluminium.

56. Verfahren nach Anspruch 55, dadurch gekennzeichnet, daß eine aluminiumhaltige Schicht verwendet wird, die einen geringeren Alumiumgehalt und einen geringeren Schmelzpunkt als das aufplattierte Aluminium aufweist.

57. Verfahren nach einem der Ansprüche 39 bis 56, dadurch gekennzeichnet, daß Finnen mit dem Rohr verbunden werden, die einen Alummiumanteil von über 90%, insbesondere 99.5% haben.

58. Verfahren nach Anspruch 57, dadurch gekennzeichnet, daß auf das Rohr Aluminium aufplattiert wird, dessen Schmelzpunkt geringer ist als das des Aluminiums der Finnen.

59. Verfahren nach einem der Ansprüche 33 bis 58, dadurch gekennzeichnet, daß ein Flußmittel (70) mit Silizium, insbesondere mit etwa 7-9% Silizium, verwendet wird, ohne ein Füllmaterial zu verwenden.

60. Verfahren nach einem der Ansprüche 33 bis 59, dadurch gekennzeichnet, daß ein "cake" (71; 76) hergestellt und verwendet wird.
